# EUROPÄISCHE PATENTSCHRIFT

(11) **EP 1 098 803 B1**
(45) Veröffentlichungstag und Bekanntmachung des Hinweises auf die Patenterteilung: **29.01.2003**
(21) Anmeldenummer: 99947203.8
(22) Anmeldetag: 13.07.1999
(51) Int. Cl.: B61L 1/00, G01N 29/26

(54) **VERFAHREN UND VORRICHTUNG ZUM PRÜFEN EINES EISENBAHNRADS**
METHOD AND DEVICE FOR INSPECTING A RAILROAD WHEEL
PROCEDE ET DISPOSITIF POUR CONTROLER UNE ROUE DE TRAIN

(30) Priorität: 23.07.1998 DE 19833027
(43) Veröffentlichungstag der Anmeldung: 16.05.2001
(73) Patentinhaber: SIEMENS AKTIENGESELLSCHAFT, 80333 München (DE); intelligeNDT Systems & Services GmbH & Co. KG, 91058 Erlangen (DE)
(72) Erfinder: FISCHER, Eberhard, D-91341 Röttenbach (DE); MEIER, Rainer, D-91058 Erlangen (DE); MOHR, Friedrich, D-90482 Nürnberg (DE); ENGL, Günter, D-91052 Erlangen (DE)
(74) Vertreter: Berg, Peter, Dipl.-Ing.
(86) Internationale Anmeldenummer: DE9902167
(87) Internationale Veröffentlichungsnummer: WO00005120

(56) Entgegenhaltungen:
- DE-A- 1 812 764
- H.J. SALZBURGER, H. HINTZE: "Tiefenbestimmung von Laufflächenfehlern an Eisenbahnrädern unter Nutzung linear polarisierter Transversalwellen" NDTNET, Bd. 3, Nr. 6, Juni 1998 (1998-06), Seiten 1-9, XP002130978 Lindau in der Anmeldung erwähnt
- H. HINTZE: "Zerstörungsfreie überwachung an Radsätzen der Deutschen Bahn AG." NDTNET, Bd. 3, Nr. 6, Juni 1998 (1998-06), Seiten 1-9, XP002130979 Aachen in der Anmeldung erwähnt

## Beschreibung

Die Erfindung liegt auf dem Gebiet der Eisenbahntechnik, speziell der Sicherheitstechnik für Eisenbahnen.

Die Erfindung bezieht sich auf ein Verfahren und eine Vorrichtung zur Detektion eines Defekts im Eisenbahnrad eines Eisenbahnzugs.

Die Eisenbahnräder von Eisenbahnzügen müssen in bestimmten Zeitabständen einer zerstörungsfreien Prüfung auf Fehler oder Defekte, insbesondere auf Risse oder Ausbrüche, unterzogen werden. Dabei müssen insbesondere Risse detektiert werden, die von einer äußeren Mantelfläche (Außenumfang), insbesondere der Lauffläche, oder von einer inneren Mantelfläche (Innenumfang), insbesondere am Radkranz oder an einem Radreifen, ausgehen. Die Risse können unter anderem entstehen durch Werkstoffermüdung, durch thermische Beanspruchung infolge der Bremsvorgänge und durch Verformungsvorgänge infolge der Druckbelastung. Um Radbrüche und damit gegebenenfalls einhergehende fatale Folgeschäden auszuschließen, ist die wiederkehrende Prüfung in kurzen zeitlichen Abständen, z.B. alle drei bis fünf Tage, erforderlich. Dabei muß die zerstörungsfreie Prüfung besonders schnell, d.h. für einen gesamten Zug in etwa einer Stunde, durchführbar sein.

Eisenbahnräder gibt es in zwei völlig verschiedenen Konstruktionen, nämlich als Vollräder und als Räder, die aus einem Radkörper und einem darauf aufgesetzten, insbesondere aufgeschrumpften, geschmiedeten Radreifen zusammengesetzt sind. Bei dem aus einem Radkörper und einem Radreifen zusammengesetzten Eisenbahnrad ist der Radreifen einer besonders hohen Beanspruchung ausgesetzt.

Unter der Internet-Adresse http://www.ndt.net/article/report/df97/hintze/hintze_d.htm wurde am 10.06.1998 um 10.13 Uhr ein Fachartikel von H. Hintze, Deutsche Bahn AG, publiziert, in dem ein Verfahren zur Ultraschallprüfung von Eisenbahnrädern mit Hilfe von Oberflächenwellen, sogenannten Rayleigh-Wellen, beschrieben ist. Dabei wird mit einem elektrodynamischen Wandler auf der Basis von Permanentmagneten (sogenannter EMUS, was für elektromagnetischer Ultraschallwandler steht) eine Ultraschall-Oberflächenwelle im Radmaterial erzeugt. Die Oberflächenwelle wird durch die Lauffläche eingekoppelt und breitet sich vom Wandler ausgehend beidseitig in einem oberflächennahen Bereich entlang der Lauffläche des Rads aus. Nach einem vollständigen Umlauf um das Rad wird die Rayleigh-Welle von einem anderen elektrodynamischen Wandler wieder empfangen. Die elektrodynamischen Wandler sind - in Fahrrichtung des Eisenbahnzugs beabstandet - in den Schienen eingebaut. Der Eisenbahnzug rollt mit geringer Geschwindigkeit über die Wandler hinweg.

Mit dieser Prüftechnik läßt sich nur die Lauffläche des Eisenbahnrads prüftechnisch erfassen, nicht aber eine Innenmantelfläche des Eisenbahnrads. Ein weiterer Nachteil dieser Technik besteht darin, daß die Eindringtiefe der Rayleigh-Welle gering ist (wenige Millimeter), so daß Risse mit geringer Tiefenausdehnung von solchen mit großer Tiefenausdehnung nicht unterscheidbar sind. Darüber hinaus ist eine Tiefenbestimmung von Rissen, speziell an der Außenmantelfläche, nicht möglich. Ein weiterer gravierender Nachteil dieser Prüftechnik liegt darin begründet, daß der Verschleiß an der Radlauffläche infolge einer erhöhten Schallschwächung sehr großen Einfluß auf das Ausbreitungsvermögen der Rayleigh-Welle hat. Daraus ergibt sich, daß diese Prüftechnik bei neuen Rädern sehr gut funktioniert, bei älteren Rädern, insbesondere mit einer Laufleistung von mehreren 10.000 km, also gerade bei Eisenbahnrädern, bei denen vermehrt mit der Rißbildung zu rechnen ist, dagegen nicht mehr aussagekräftig ist und deshalb versagt.

Unter der Internet-Adresse http://www.ndt.net/article/0698/salzb/salzb.htm wurde am 10.06.1998 um 10.10 Uhr ein Bericht über einen Vortrag auf der Jahrestagung der Deutschen Gesellschaft für zerstörungsfreie Werkstoffprüfung in Lindau vom 13. bis 15. Mai 1996, gehalten von H.-J. Salzburger und H. Hintze, veröffentlicht. In diesem Tagungsbericht ist ein Impulsecho-Prüfverfahren zur Detektion eines Risses in einem Eisenbahnrad beschrieben, bei dem von der Stirnseite des Eisenbahnrades aus mit linear polarisierten Transversalwellen senkrecht bezüglich der Stirnseite eingestrahlt wird. Bei diesem Prüfverfahren wird die Schallschwächung von quer zum Riß polarisierten Wellen ausgenutzt. Es müssen also polarisierte Ultraschallwellen erzeugt werden, wozu wie bei dem erstgenannten Prüfverfahren elektromagnetisch arbeitende Ultraschallwandler (EMUS) nötig sind. Diese sogenannten EMUS-Wandler funktionieren bei heutigem Stand der Technik für die Rißprüfung an Eisenbahnrädern nicht ausreichend zuverlässig.

Bei dem letztgenannten Verfahren werden die Eisenbahnräder - bei ruhendem Eisenbahnzug - auf einem Rollenbock mit Hilfe eines Treibrads gedreht.

Aus dem unter der erstgenannten Internet-Adresse http://www.ndt.net/article/report/df97/hintze/hintze_d.htm publizierten Fachartikel ist es ferner bekannt, daß die Lauffläche von Eisenbahnrädern, speziell der Eisenbahnräder von Hochgeschwindigkeitszügen, eine bezüglich der Fahrrichtung des Zugs innere sowie eine äußere Verschleißzone aufweisen. Die beiden Verschleißzonen erstrecken sich im wesentlichen um den gesamten Außenumfang des Eisenbahnrads. Sie sind relativ zueinander in einer zur Rotationsachse des Eisenbahnrads parallelen Richtung beabstandet. Beispielsweise ist die äußere Verschleißzone (Zone 1) 30 bis 60 mm und die innere Verschleißzone (Zone 2) 80 bis 90 mm von der äußeren Stirnfläche des Eisenbahnrads entfernt. Die innere Verschleißzone ist insbesondere schmäler als die äußere.

In den beiden Verschleißzonen unterliegen die Eisenbahnräder einer besonders hohen Beanspruchung, so daß in diesen Verschleißzonen nach längerem Betrieb bevorzugt Risse auftreten. Die Risse sind überwiegend senkrecht und in geringerem Umfang schräg bezüglich der Laufrichtung der Lauffläche an der jeweiligen Rißstelle orientiert. Die Risse verlaufen zumeist von außen radial in das Innere des Eisenbahnrads hinein.

Infolge eines ICE-Unfalls im Juni 1998 in Deutschland ist es bekannt geworden, daß Risse auch von einem Innenumfang ausgehen können. Beispielsweise können bei einem Eisenbahnrad, das aus einem Radkörper und einem aufgesetzten Radreifen zusammengesetzt ist, die Risse vom Innenumfang des Radreifens wachsen.

Die Risse können aber auch bei einem als Vollrad (Monoblock) ausgeführten Eisenbahnrad vom Innenumfang der Nabe wachsen. Bei beiden genannten Typen von Eisenbahnrädern treten Risse auch bevorzugt an solchen Stellen auf, an denen sich die Dicke des Eisenbahnrads (gemessen in Richtung der Rotationsachse) ändert (Breitenverjüngung).

Die deutsche Offenlegungsschrift DE 18 12 764 hat eine Vorrichtung zum Gegenstand, die die Rißprüfung an einem Eisenbahnrad dadurch ermöglicht, daß ein gegenüber dem Rad stillstehender Träger für ein Abtastgerät auf dem Rad elastisch aufgespannt ist. Die Vorrichtung gemäß der DE 18 12 764 A1 stützt sich also am Eisenbahnrad ab, d.h. es ist vor Prüfung eines Eisenbahnrads ein positionsgenaues und zeitlich aufwendiges Anflanschen des Trägers an das jeweilige Rad erforderlich. Dadurch sind komplette Eisenbahnzüge bezüglich Defekten in ihren Rädern mit wirtschaftlich vertretbarem Zeitaufwand nicht prüfbar.

Es besteht demzufolge ein Bedarf, Eisenbahnräder beliebigen Typs derart zu prüfen, daß Risse in möglichst vielen denkbaren Positionen und Orientierungen zuverlässiger und schneller als mit den bekannten Prüfmethoden detektierbar sind. Der Erfindung liegt demzufolge die Aufgabe zugrunde, ein Verfahren als auch eine Vorrichtung zu diesem Zwecke anzugeben.

Die auf ein Verfahren bezogene Aufgabe wird bei einem Verfahren der eingangs genannten Art gemäß der Erfindung dadurch gelöst,
a) daß ein an einem Prüfwagen beweglich gelagerter erster Ultraschallprüfkopf an das Eisenbahnrad herangeführt wird,
b) daß der erste Ultraschallprüfkopf akustisch an das Eisenbahnrad angekoppelt wird,
c) daß der Eisenbahnzug mit einer vorgegebenen Fahrgeschwindigkeit bewegt wird, und
d) daß gleichzeitig der Prüfwagen auf einer Stützstruktur in der Umgebung des Eisenbahnzugs in Fahrrichtung mit der Fahrgeschwindigkeit bewegt wird.

Die Stützstruktur ist beispielsweise ein Boden einer Wartungshalle oder eine auf dem Boden aufgebaute Aufständerung. Insbesondere umfaßt die Stützstruktur eine parallel zur Fährrichtung des Eisenbahnzugs geführte Führungsschiene, entlang der der Prüfwagen verfahrbar ist.

Vorzugsweise ist der erste Ultraschallprüfkopf mit seiner Einkoppelfläche an der Lauffläche des Eisenbahnrads akustisch angekoppelt.

Nach einer bevorzugten Weiterbildung des Verfahrens wird ein zweiter Ultraschallprüfkopf in gleicher Weise wie der erste Ultraschallprüfkopf bewegt, wobei der zweite Ultraschallprüfkopf mit seiner Einkoppelfläche an der Lauffläche akustisch angekoppelt und bezüglich dem ersten Ultraschallprüfkopf entlang einer zur Rotationsachse des Eisenbahnrads parallelen Richtung versetzt ist.

Mit zwei versetzt angeordneten Ultraschallprüfköpfen läßt sich die Lauffläche im wesentlichen über die gesamte Breite auf einen Riß hin untersuchen. Der erste Ultraschallprüfkopf und der zweite Ultraschallprüfkopf führen dann z.B. relativ zum Eisenbahnrad eine Bewegung entlang einer ersten Umfanglinie bzw. entlang einer zweiten Umfanglinie auf der Lauffläche aus, wobei die Umfanglinien in Richtung der Rotationsachse des Eisenbahnrads beabstandet sind.

Das Verfahren nach der Erfindung ist in vorteilhafter Weise in kurzer Zeit während der Wartung eines Zugs, wie sie bei einem Hochgeschwindigkeitszug beispielsweise alle zwei bis drei Tage erforderlich ist, durchführbar. Dabei wird der Zug mit geringer Fahrgeschwindigkeit bewegt. Die Lauffläche des Eisenbahnrads bewegt sich dann mit der gleichen Geschwindigkeit unter der Einkoppelfläche des ersten Ultraschallprüfkopfs hinweg.

Es ist z.B. eine konstante Fahrgeschwindigkeit aus dem Bereich von 1 km/h bis 10 km/h, bevorzugt aus dem Bereich von 1 km/h bis 5 km/h vorgegeben.

Der Versatz der beiden Ultraschallprüfköpfe, bezogen auf die Einschallstellen, weist vorzugsweise einen Wert zwischen 30 mm und 60 mm auf.

Der erste Ultraschallprüfkopf ist beispielsweise derart positioniert, daß seine Einkoppelfläche die äußere Verschleißzone an der Lauffläche überstreicht, d.h. derart, daß die von ihm abgestrahlte Ultraschallwelle die äußere Verschleißzone abtastet.

Der zweite Ultraschallprüfkopf ist bevorzugt derart positioniert, daß seine Einkoppelfläche die innere Verschleißzone an der Lauffläche überstreicht, d.h. derart, daß die von ihm abgestrahlte Ultraschallwelle die innere Verschleißzone abtastet.

Bei einer derartigen Anordnung des ersten und/oder zweiten Ultraschallprüfkopfs werden Risse an der Lauffläche ganz besonders sicher detektiert.

Nach einer bevorzugten Ausgestaltung des Verfahrens werden der erste Ultraschallprüfkopf und/oder der zweite Ultraschallprüfkopf in Sende-Empfangs-Technik (Sende-Empfangs-Modus) betrieben.

Diese Vorgehensweise hat den Vorteil, daß beim Empfang eines von einem Riß reflektierten Ultraschallechos keine Totzeit des Empfängers auftritt, da zum Senden und zum Empfangen der Ultraschallwelle zwei unterschiedliche Ultraschallwandler vorhanden sind. Damit läßt sich besonders gut ein möglicher Riß mit einer lediglich sehr geringen Tiefenausdehnung detektieren.

Bevorzugt ist der erste Ultraschallprüfkopf derart angeordnet, daß seine Abstrahlrichtung in Projektion auf eine tangential zur Lauffläche orientierte Tangential-Ebene bezüglich einer Umfangstangente um einen ersten Tangential-Einschallwinkel geneigt ist.

Weiterhin bevorzugt ist der zweite Ultraschallprüfkopf derart angeordnet, daß seine Abstrahlrichtung in Projektion auf eine tangential zur Lauffläche orientierte Tangential-Ebene bezüglich einer Umfangstangente um einen zweiten Tangential-Einschallwinkel geneigt ist.

Mit vereinfachten Worten: Bevorzugt sind der erste und der zweite Ultraschallprüfkopf, d.h. insbesondere ihre jeweilige Abstrahlrichtung, in einer Draufsicht auf die Lauffläche jeweils schräg bezüglich der Fahrrichtung des Eisenbahnzugs angeordnet.

Dabei haben der erste Tangential-Einschallwinkel und der zweite Tangential-Einschallwinkel bezüglich der Umfangstangente vorzugsweise unterschiedliche Vorzeichen. Damit lassen sich in vorteilhafter Weise auch die Randbereiche der Lauffläche (an den Stirnseiten) sicher überprüfen.

Der erste Tangential-Einschallwinkel hat beispielsweise einen Wert aus dem Bereich von 0° bis +20° und der zweite Tangential-Einschallwinkel einen Wert aus dem Bereich von 0° bis -20°.

Der erste Ultraschallprüfkopf und/oder der zweite Ultraschallprüfkopf weisen insbesondere einen als Gruppenstrahler ausgebildeten Ultraschallwandler auf.

Dadurch ist es beispielsweise möglich, den Einschallwinkel einer in das Eisenbahnrad eingekoppelten Ultraschallwelle zu variieren, d.h. die Ultraschallwelle entsprechend zu schwenken. Dadurch wird die Zahl der detektierbaren Rißorientierungen und -positionen vorteilhaft weiter erhöht.

Nach einer bevorzugten Ausgestaltung wird die Abstrahlrichtung des ersten Ultraschallprüfkopfs mit einer Komponente in einer tangential zur Lauffläche orientierten Tangential-Ebene geschwenkt (erster Tangentialschwenk).

Dabei ist die Mittenrichtung des Schwenkintervalls des ersten Ultraschallprüfkopfs bevorzugt bezüglich einer Umfangstangente geneigt.

Nach einer anderen bevorzugten Ausgestaltung wird die Abstrahlrichtung des zweiten Ultraschallprüfkopfs mit einer Komponente in einer tangential zur Lauffläche orientierten Tangential-Ebene geschwenkt (zweiter Tangentialschwenk).

Dabei ist die Mittenrichtung des Schwenkintervalls des zweiten Ultraschallprüfkopfs bevorzugt bezüglich einer Umfangstangente geneigt.

Vorzugsweise sind die Mittenrichtungen des Schwenkintervalls des ersten Ultraschallprüfkopfs und des zweiten Ultraschallprüfkopfs nach unterschiedlichen Seiten der Umfangstangente geneigt.

Die Mittenrichtung des Schwenkintervalls des ersten Ultraschallprüfkopfs ist beispielsweise um +0° bis +20° zur Umfangstangente, die des Schwenkintervalls des zweiten Ultraschallprüfkopfs beispielsweise um -0°bis -20° zur Umfangstangente geneigt.

Die Schwenks haben auch den Vorteil, daß die Lauffläche über ihre gesamte Breite lückenlos prüfbar ist, ohne daß ein ungeprüfter Bereich vorhanden wäre. Ein weiterer Vorteil besteht darin, daß mit den genannten Schwenks auch schräg liegende Risse erfaßbar sind.

Unabhängig davon, ob sie als Gruppenstrahler ausgebildet sind, sind der erste und der zweite Ultraschallprüfkopf z.B. außermittig auf der Lauffläche angeordnet und strahlen z.B. in Richtung auf den auf ihrer Seite gelegenen Randbereich der Lauffläche, d.h. nach außen.

Bei wenigstens einem der Ultraschallprüfköpfe weist ein Vertikal-Einschallwinkel vorzugsweise einen Wert zwischen 50° und 80°, und weiter bevorzugt zwischen 60° und 70°, zu einem Radius (Radiuslinie) auf. Innerhalb dieses Winkelbereichs ist beispielsweise ein vertikal-Einschallwinkel eingestellt, während einer der oben genannten Tangentialschwenks durchgeführt wird. Der Vertikal-Einschallwinkel ist z.B. in einer im wesentlichen senkrecht auf der Rotationsachse des Eisenbahnrads stehenden Ebene abgemessen.

Bei Durchführung des Verfahrens, insbesondere mit den bevorzugten Vertikal-Einschallwinkeln, kann auch eine Kriechwelle erzeugt werden. Damit ist besonders ein von der Lauffläche her wachsender Riß mit geringer Tiefenausdehnung sicher detektierbar.

Bei einer anderen vorteilhaften Weiterbildung des Verfahrens werden der erste Ultraschallprüfkopf und/oder der zweite Ultraschallprüfkopf in Impuls-Echo-Technik (Impuls-Echo-Modus) betrieben. Bevorzugt wird dabei mit einem Einschallwinkel (Vertikal-Einschallwinkel) aus dem Bereich von 55° bis 65° eine Ultraschallwelle eingestrahlt und eine gegebenenfalls vorhandene rückwärts gerichtete Reflexion detektiert. Damit ist in vorteilhafter Weise auch der Innenumfang eines Radreifens prüfbar.

Vorzugsweise ist das Verfahren dadurch weitergebildet, daß ein dritter Ultraschallprüfkopf, der mit seiner Einkoppelfläche an der Lauffläche akustisch angekoppelt ist, in gleicher Weise wie der erste Ultraschallprüfkopf bewegt wird. Von dem dritten Ultraschallprüfkopf ist bevorzugt eine Ultraschallwelle mit einer Komponente in Richtung auf den ersten Ultraschallprüfkopf sendbar. Beispielsweise strahlt der erste Ultraschallprüfkopf mit einer Komponente im wesentlichen in Laufrichtung der Lauffläche und der dritte Ultraschallprüfkopf mit einer Komponente im wesentlichen entgegen der Laufrichtung ab. Dadurch ist eine Rißfläche beidseitig detektierbar, wodurch die Zuverlässigkeit des Verfahrens weiter erhöht wird (teilweise redundante Detektion).

Von dem dritten Ultraschallprüfkopf kann auch eine Ultraschallwelle mit einer Komponente in Richtung von dem ersten Ultraschallprüfkopf empfangbar sein. Die Komponente ist eine Komponente der Schallrichtung in Projektion auf die Tangential-Ebene.

Beispielsweise ist der dritte Ultraschallprüfkopf bezüglich dem ersten Ultraschallprüfkopf derart angeordnet, daß dieser als Sender für den als Empfänger angesteuerten dritten Ultraschallprüfkopf oder umgekehrt verwendbar ist. Dabei wird z.B. unter V-Durchschallung oder direkter Anschallung gearbeitet. Dadurch wird unter Ausnutzung des Abschattungseffektes eine noch größere Anzahl von möglichen Rißlagen und Rißorientierungen detektierbar.

Weitergebildet wird das Verfahren z.B. auch dadurch, daß ein vierter Ultraschallprüfkopf, der mit seiner Einkoppelfläche an der Lauffläche akustisch angekoppelt ist, in gleicher Weise wie der zweite Ultraschallprüfkopf bewegt wird. Von dem vierten Ultraschallprüfkopf ist bevorzugt eine Ultraschallwelle mit einer Komponente in Richtung auf den zweiten Ultraschallprüfkopf sendbar, beispielsweise mit einer Komponente entgegen der Laufrichtung, falls der zweite Ultraschallprüfkopf mit einer Komponente im wesentlichen in Laufrichtung abstrahlt.

Von dem vierten Ultraschallprüfkopf kann auch eine Ultraschallwelle mit einer Komponente in Richtung von dem zweiten Ultraschallprüfkopf empfangbar sein. Beispielsweise ist der vierte Ultraschallprüfkopf bezüglich dem zweiten Ultraschallprüfkopf derart angeordnet, daß dieser als Sender für den als Empfänger angesteuerten vierten Ultraschallprüfkopf oder umgekehrt verwendbar ist. Dabei wird z.B. unter V-Durchschallung oder direkter Anschallung gearbeitet.

Der dritte und/oder vierte Ultraschallprüfkopf weisen insbesondere einen als Gruppenstrahler ausgebildeten Ultraschallwandler auf. Sie können in analoger Weise wie der erste und/oder zweite Ultraschallprüfkopf mit einem Tangentialschwenk betrieben werden.

Die auf eine Vorrichtung bezogene Aufgabe wird bei einer Vorrichtung der eingangs genannten Art gemäß der Erfindung gelöst durch einen in der Fahrrichtung und mit der Fahrgeschwindigkeit des Eisenbahnzugs auf einer Stützstruktur in der Umgebung des Eisenbahnzugs verfahrbaren Prüfwagen, an dem ein erster Ultraschallprüfkopf beweglich gelagert ist, der akustisch an das Eisenbahnrad ankoppelbar ist.

Der erste Ultraschallprüfkopf ist also dazu hergerichtet, an das Eisenbahnrad akustisch angekoppelt zu sein, und zwar während des Fahrens des Eisenbahnzugs. Insbesondere ist an dem Prüfwagen ein Manipulatorarm beweglich gelagert, der endseitig den ersten Ultraschallprüfkopf trägt.

Die Vorrichtung ist bevorzugt zur Durchführung des Verfahrens geeignet. Die bezüglich des Verfahrens genannten Vorteile gelten für die Vorrichtung nach der Erfindung analog.

Beispielsweise ist der Prüfwagen seitlich neben dem Eisenbahnzug angeordnet, wodurch ausreichend Platz für Versorgungseinrichtungen ist und wodurch das Eisenbahnrad besonders einfach zugänglich ist. Der Prüfwagen ist z.B. auf einer Prüfschiene verfahrbar.

An dem Prüfwagen ist bevorzugt ein zweiter Ultraschallprüfkopf befestigt.

Beispielsweise ist der erste Ultraschallprüfkopf bzw. der zweite Ultraschallprüfkopf an die Lauffläche des Eisenbahnrads akustisch ankoppelbar.

Bei einer vorteilhaften Ausgestaltung der Vorrichtung ist der zweite Ultraschallprüfkopf auf dem Prüfwagen derart angeordnet, daß er bezüglich des ersten Ultraschallprüfkopfs entlang einer zur Rotationsachse des Eisenbahnrads parallelen Richtung versetzt ankoppelbar ist.

Vorzugsweise ist der erste Ultraschallprüfkopf bzw. der zweite Ultraschallprüfkopf - z.B. einzeln - federnd auf die Lauffläche des Eisenbahnrads aufsetzbar.

Der Prüfwagen ist in besonders einfacher Weise mit dem Eisenbahnzug synchronisierbar, falls der Prüfwagen - wie bevorzugt - vom fahrenden Eisenbahnzug antreibbar ist.

Zur gleichzeitigen Rißdetektion in zwei oder vier Eisenbahnrädern eines Drehgestells des Eisenbahnzugs weist der Prüfwagen in einer bevorzugten Weiterbildung weitere Ultraschällprüfköpfe auf. Die weiteren Ultraschallprüfköpfe sind insbesondere ein oder mehrere weitere erste Ultraschallprüfköpfe, ein oder mehrere zweite Ultraschallprüfköpfe sowie optional ein oder mehrere weitere dritte sowie ein oder mehrere weitere vierte Ultraschallprüfköpfe.

Der erste Ultraschallprüfkopf und der zweite Ultraschallprüfkopf und optional ein dritter und ein vierter Ultraschallprüfkopf sind bevorzugt auf einem gemeinsamen Prüfkopfträger angeordnet, der am Prüfwagen befestigt ist.

Die weiteren Ultraschallprüfköpfe sind in analoger Weise auf einem oder mehreren weiteren Prüfkopfträgern angeordnet.

Mehrere Ausführungsbeispiele einer Vorrichtung nach der Erfindung sind in schematischer Weise in den Figuren 1 bis 6 erläutert. Diese Figuren dienen auch der Erläuterung des Verfahrens nach der Erfindung. Es zeigen:
- FIG 1: ein erstes Ausführungsbeispiel einer Vorrichtung nach der Erfindung,
- FIG 2: ein zweites Ausführungsbeispiel einer Vorrichtung nach der Erfindung,
- FIG 3: die Vorrichtung der Figur 1 oder 2 in einem Detailausschnitt an einem Eisenbahnrad in einer Draufsicht auf dessen Stirnfläche,
- FIG 4: den Detailausschnitt der Figur 3 in einer Draufsicht auf die Lauffläche des Eisenbahnrads,
- FIG 5: ein stark vereinfachend dargestelltes Eisenbahnrad, in das verschiedene Winkelschwenks bei der Durchführung des Verfahrens nach der Erfindung eingezeichnet sind, und
- FIG 6: eine Vorrichtung nach der Erfindung in einer Detaildarstellung an den Verschleißzonen eines Eisenbahnrads.

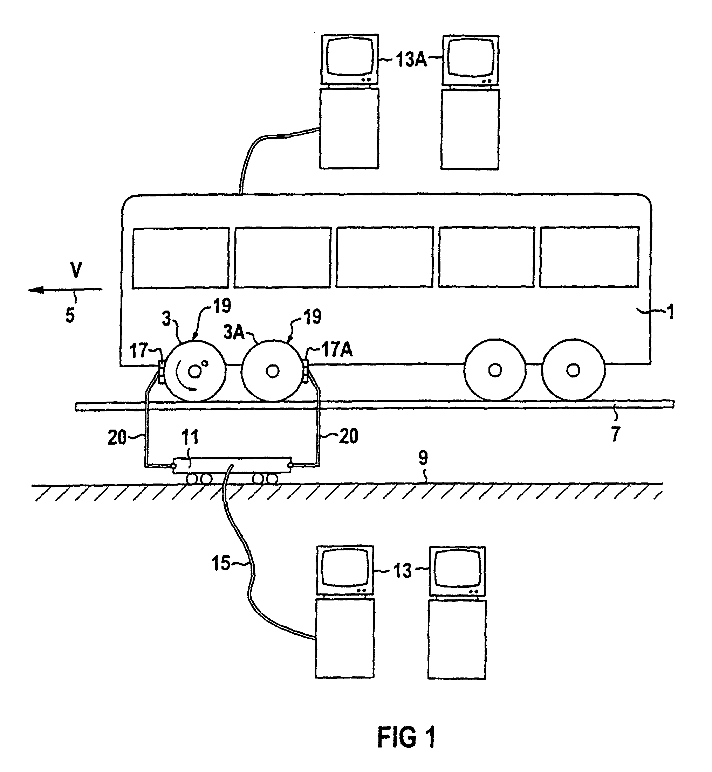

Figur 1 zeigt einen Eisenbahnzug 1 mit einem Eisenbahnrad 3 und einem weiteren Eisenbahnrad 3A. Der Eisenbahnzug 1 wird in Fahrrichtung 5 mit einer Fahrgeschwindigkeit V auf einer Eisenbahnschiene 7 bewegt. Seitlich neben der Eisenbahnschiene 7 verläuft - weitgehend parallel zu dieser - eine Prüfschiene 9, die als Stützstruktur für einen Prüfwagen 11 dient, auf der der Prüfwagen 11 in Fahrrichtung 5 bewegbar ist. Die Länge der Prüfschiene 9 ist größer als der Umfang der Eisenbahnräder 3, 3A, gemessen an deren Lauffläche.

Figur 1 zeigt ferner eine Auswerteeinheit 13, die über eine elektrische Verbindung 15 mit einem Prüfkopfträger 17 sowie mit einem weiteren Prüfkopfträger 17A in Verbindung steht. Die Prüfkopfträger 17, 17A sind an der jeweiligen Lauffläche 19 der Eisenbahnräder 3 bzw. 3A akustisch angekoppelt. Die Prüfkopfträger 17, 17A sind mit dem Prüfwagen 11 über dort gelagerte Manipulatorarme 20 verbunden. Die Manipulatorarme 20 sind durch (nicht gezeigte) Federelemente vorgespannt und drücken die Prüfkopfträger 17, 17A auf die jeweilige Lauffläche 19.

Durch Bewegung der Manipulatorarme 20 sind die Prüfkopfträger 17, 17A mit den darauf angeordneten Ultraschallprüfköpfen an die Eisenbahnräder 3 bzw. 3A heranführbar und insbesondere an diese akustisch ankoppelbar. Zum akustischen Ankoppeln können aber auch gesonderte Stellelemente vorhanden sein, die beispielsweise endseitig an den Manipulatorarmen 20 angeordnet sind. Nach Beendigung der Prüfung des betreffenden Eisenbahnrads 3 bzw. 3A werden die Prüfkopfträger 17, 17A mit Hilfe der Manipulatorarme 20 von den Eisenbahnrädern 3, 3A wegbewegt. Die Prüfkopfträger 17, 17A verharren dann entweder in einer Ruhestellung, oder sie werden mittels des Prüfwagens 11 zu den nächsten zu prüfenden Eisenbahnrädern bewegt und an diese herangeführt.

An der bezüglich der Ansicht der Figur 1 hinteren Seite des Eisenbahnzugs 1 sind weitere (nicht gezeigte) Prüfkopfträger zur Prüfung der dort befindlichen anderen Eisenbahnräder des gleichen Drehgestells vorhanden, wobei diesen Prüfkopfträgern eine weitere Auswerteeinheit 13A zugeordnet ist. Für diese Prüfkopfträger können ein gesonderter Prüfwagen sowie eine gesonderte Prüfschiene vorgesehen sein.

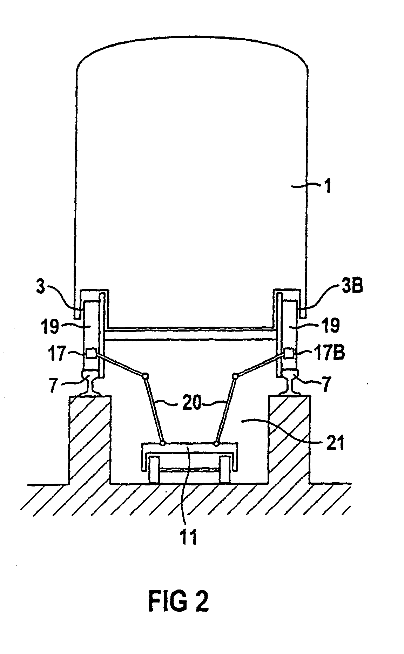

Figur 2 zeigt ein zweites Ausführungsbeispiel, wobei der Eisenbahnzug 1 im Querschnitt dargestellt ist. Der Prüfwagen 11 ist bei diesem Ausführungsbeispiel unterhalb des Eisenbahnzugs 1 auf dem Boden in einem Wartungsschacht 21 angeordnet, auf dessen Seitenwänden die Eisenbahnschiene 7 aufgeständert ist. Am Prüfwagen 11 sind über Manipulatorarme 20 ein Prüfkopfträger 17 und ein weiterer Prüfkopfträger 17B befestigt, mit denen weitgehend gleichzeitig zwei gegenüberliegende Eisenbahnräder 3, 3B prüfbar sind. Der Boden des Wartungsschachts 21 bildet eine Stützstruktur für den Prüfwagen 11.

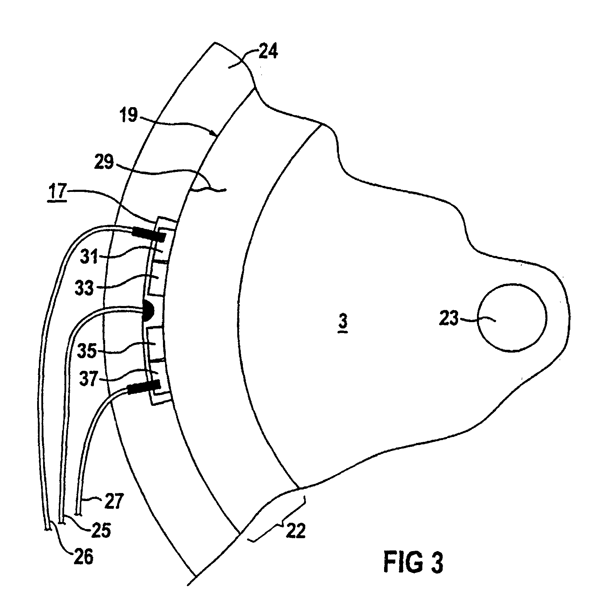

Figur 3 zeigt einen Ausschnitt aus den Figuren 1 oder 2 betreffend den Prüfkopfträger 17. Das Eisenbahnrad 3 ist mit seiner Radnabe 23, seinem Radkranz 22 und seinem Spurkranz 24 mit Blick auf seine äußere Stirnseite dargestellt. Der Prüfkopfträger 17 ist an der Lauffläche 19 akustisch angekoppelt. Er steht über eine elektrische Leitung 25 sowie über Zufuhrleitungen 26, 27 für ein Ankoppelmedium (Wasser) mit einer nicht dargestellten Auswerte- und Versorgungseinheit in Verbindung.

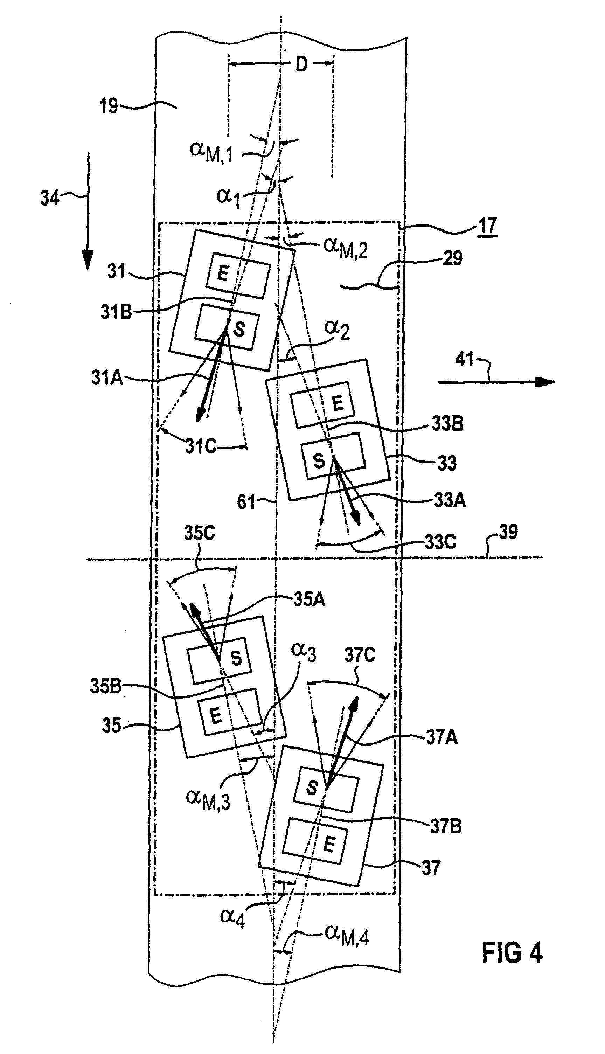

Figur 4 zeigt den aufgeschlossen dargestellten Prüfkopfträger 17 in einer Blickrichtung auf die Lauffläche 19. Orientierungen und Positionen eines möglichen Risses oder Defekts 29 sind in Figur 3 und Figur 4 angedeutet.

Figur 4 zeigt weiterhin, daß der Prüfkopfträger 17 einen ersten Ultraschallprüfkopf 31 und einen zweiten Ultraschallprüfkopf 33 aufweist, die als Gruppenstrahler ("phased array") ausgebildet sind. Die Abstrahlrichtungen 31A, 33A (mit zugehörigem ersten Tangential-Einschallwinkel (Schielwinkel) α₁ bzw. zweiten Tangential-Einschallwinkel α₂) der Ultraschallprüfköpfe 31, 33 sind - grob formuliert - im wesentlichen in einer Umfangsrichtung 34 entlang einer Umfangstangente 61 des Eisenbahnrads 3 orientiert und innerhalb von Schwenkintervallen 31C, 33C veränderlich.

Im Detail sind die Ultraschallprüfköpfe 31, 33 folgendermaßen angeordnet: Ihr jeweiliges Schwenkintervall 31C, 33C reicht jeweils von +30° bis -30° bezüglich einer jeweiligen Mittenrichtung 31B bzw. 33B, d.h. die Abstrahlrichtungen 31A, 33A sind jeweils insgesamt um 60° schwenkbar. Die Mittenrichtung 31B des Schwenkintervalls 31C des ersten Ultraschallprüfkopfs 31 ist um einen ersten Mitten-Einschallwinkel α_{M,1} = +10° gegenüber einer Umfangstangente 61 zu einem Rand der Lauffläche 19 hin geneigt, die Mittenrichtung 33B des Schwenkintervalls 33C des zweiten Ultraschallprüfkopfs 33 um einen zweiten Mitten-Einschallwinkel α_{M,2} = -10° gegenüber der Umfangstangente 61 hin zum gegenüberliegenden Rand. Dadurch ist durch die beiden Ultraschallprüfköpfe 31, 33 in der Kombination ein Winkelbereich von -40° bis +40° bezüglich der Umfangstangente 61 abtastbar.

Ein dritter Ultraschallprüfkopf 35 und ein vierter Ultraschallprüfkopf 37, die wie die anderen beiden Ultraschallprüfköpfe 31, 33 an der Lauffläche 19 akustisch angekoppelt sind, strahlen im wesentlichen in entgegengesetzter Umfangsrichtung 34.

Der dritte Ultraschallprüfkopf 35 ist mit seiner Mittenrichtung 35B (dritter Mitten-Einschallwinkel α_{M, 3}) derart angeordnet, daß seine Abstrahlrichtung 35A (dritter Tangential-Einschallwinkel α₃) (oder zumindest ein Teilbündel der Abstrahlkeule) innerhalb seines Schwenkintervalls 35C so schwenkbar ist, daß eine von ihm gesendete Ultraschallwelle von dem ersten Ultraschallprüfkopf 31 empfangbar ist. Der erste Ultraschallprüfkopf 31 und der dritte Ultraschallprüfkopf 35 sind dadurch auch im Sende-Empfangsmodus betreibbar, wobei eine von einem Riß erzeugte Abschattung als Verminderung des Empfangssignals zur Detektion verwendet wird.

Der vierte Ultraschallprüfkopf 37 (Abstrahlrichtung 37A, Mittenrichtung 37B, Schwenkintervall 37C, vierter Tangential-Einschallwinkel α₄) arbeitet in analoger Weise in Kombination mit dem zweiten Ultraschallprüfkopf 33.

Der erste Ultraschallprüfkopf 31 und der zweite Ultraschallprüfkopf 33 sind entlang einer Richtung 41 parallel zur Rotationsachse 39 des Eisenbahnrads 3 relativ zueinander um einen Versatz D von etwa 45 mm - bezogen auf die Schalleintrittsstellen - verschoben. Infolge des Versatzes wird durch den ersten Ultraschallprüfkopf 31 und den zweiten Ultraschallprüfkopf 33 eine Prüfspur erzeugt, die die Lauffläche 19 über ihre gesamte Breite weitgehend abdeckt. Der dritte Ultraschallprüfkopf 35 und der vierte Ultraschallprüfkopf sind in gleicher Weise versetzt.

Die Ultraschallprüfköpfe 31, 33, 35, 37 umfassen jeweils einen Sender E und einen Empfänger E, so daß sie im Sende-Empfangs-Modus betreibbar sind.

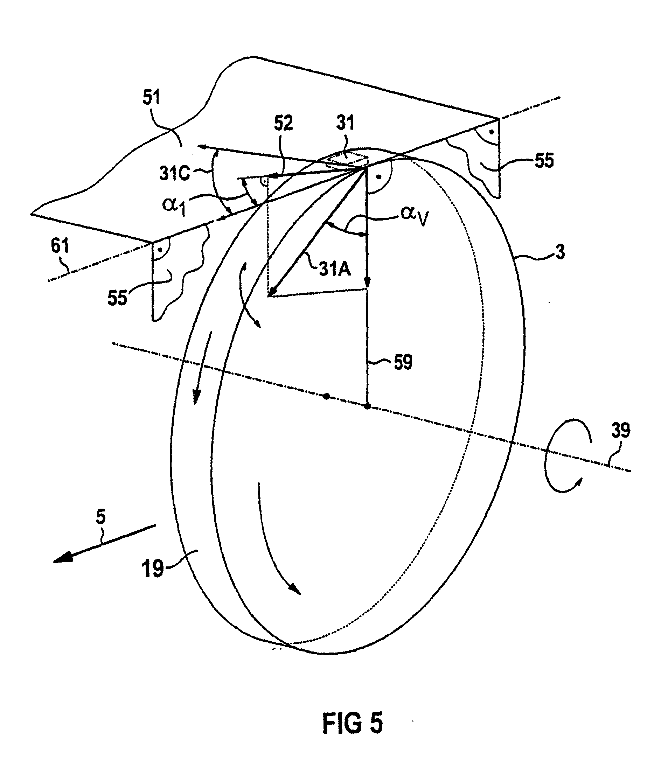

In der Figur 5 sind die für die Beschreibung verwendeten Einschallwinkel und die Einschallwinkel-Schwenks näher erläutert, die an den Ultraschallprüfköpfen 31, 33, 35, 37 eingestellt sind bzw. mit diesen durchgeführt werden. Ein Eisenbahnrad 3 ist in dieser Figur stark schematisierend als Scheibe mit einer Lauffläche 19 und ohne Spurkranz dargestellt. Das Eisenbahnrad 3 rotiert um eine Rotationsachse 39 und rollt in Fahrrichtung 5.

Figur 5 zeigt zunächst eine parallel zur Rotationsachse 39 verlaufende Tangential-Ebene 51 an der Lauffläche 19 und zwar am Schnittpunkt der Lauffläche 19 mit einem von einer Radiuslinie gebildeten Einfallslot 59. Die Abstrahlrichtung 31A eines der Ultraschallprüfköpfe 31, 33, 35, 37 - in Figur 5 beispielhaft gezeigt für den ersten Ultraschallprüfkopf 31 - wird derart geschwenkt, daß die auf die Tangential-Ebene 51 projizierte Komponente 52 einen Tangentialschwenk mit einem Schwenkintervall 31C (siehe auch Figur 4) ausführt. Der Einfachheit halber ist das Schwenkintervall 31C in Figur 5 nur auf einer der Seiten einer durch die Tangential-Ebene 51 verlaufenden Umfangstangente 61 dargestellt. In Figur 5 ist der maximale Tangential-Einschallwinkel mit etwa +40° gezeigt. In der praktischen Anwendung erstreckt sich der Tangential-Einschallwinkel für den einzelnen Ultraschallprüfkopf 31 von ca. +40° bis etwa -20°.

Figur 5 zeigt ferner eine auf der Rotationsachse 39 senkrecht stehende Vertikal-Ebene 55. Die Vertikal-Ebene 55 verläuft parallel zum Eisenbahnrad 3. Ein Vertikal-Einschallwinkel αᵥ, gemessen bezüglich des Radius 59, beträgt etwa +70°.

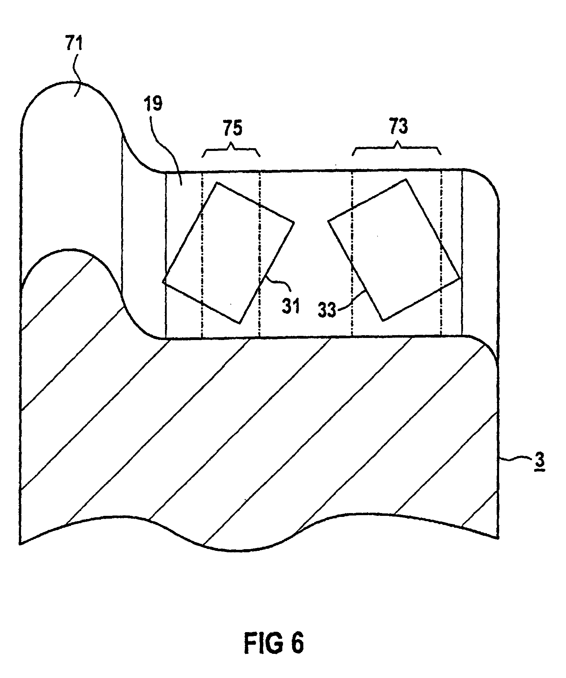

Figur 6 zeigt das Eisenbahnrad 3 in einer Draufsicht auf die Lauffläche 19 und einen Spurkranz 71. Auf der Lauffläche 19 sind die äußere Verschleißzone 73 und die innere Verschleißzone 75 angedeutet, in denen ein Riß mit größter Wahrscheinlichkeit auftritt.

## Patentansprüche

1. Verfahren zur Detektion eines Defekts (29) im Eisenbahnrad (3) eines Eisenbahnzugs (1),
**dadurch gekennzeichnet**,
a) daß ein an einem Prüfwagen (11) beweglich gelagerter erster Ultraschallprüfkopf (31) an das Eisenbahnrad (3) herangeführt wird,
b) daß der erste Ultraschallprüfkopf (31) akustisch an das Eisenbahnrad (3) angekoppelt wird,
c) daß der Eisenbahnzug (1) mit einer vorgegebenen Fahrgeschwindigkeit (V) bewegt wird, und
d) daß gleichzeitig der Prüfwagen (11) auf einer Stützstruktur in der Umgebung des Eisenbahnzugs (1) in Fahrrichtung (5) mit der Fahrgeschwindigkeit (V) bewegt wird.

2. Verfahren nach Anspruch 1,
**dadurch gekennzeichnet, daß** der erste Ultraschallprüfkopf (31) mit seiner Einkoppelfläche an der Lauffläche (19) des Eisenbahnrads (3) akustisch angekoppelt ist.

3. Verfahren nach Anspruch 1 oder 2,
**dadurch gekennzeichnet, daß** ein zweiter Ultraschallprüfkopf (33), der mit seiner Einkoppelfläche an der Lauffläche (19) akustisch angekoppelt und bezüglich dem ersten Ultraschallprüfkopf (31) entlang einer zur Rotationsachse (39) des Eisenbahnrads (3) parallelen Richtung (41) versetzt ist, in gleicher Weise wie der erste Ultraschallprüfkopf (31) bewegt wird.

4. Verfahren nach Anspruch 3,
**dadurch gekennzeichnet, daß** der Versatz (D) der beiden Ultraschallprüfköpfe (31, 33), bezogen auf die Einschallstellen, einen Wert zwischen 30 mm und 60 mm aufweist.

5. Verfahren nach einem der Ansprüche 1 bis 4,
**dadurch gekennzeichnet, daß** der erste Ultraschallprüfkopf (31) derart positioniert ist, daß seine Einkoppelfläche die äußere Verschleißzone (73) an der Lauffläche (19) überstreicht.

6. Verfahren nach einem der Ansprüche 3 bis 5,
**dadurch gekennzeichnet, daß** der zweite Ultraschallprüfkopf (33) derart positioniert ist, daß seine Einkoppelfläche die innere Verschleißzone (75) an der Lauffläche (19) überstreicht.

7. Verfahren nach einem der Ansprüche 1 bis 6 oder 3 bis 6,
**dadurch gekennzeichnet, daß** der erste Ultraschallprüfkopf (31) bzw. der zweite Ultraschallprüfkopf (33) in Sende-Empfangs-Technik betrieben wird.

8. Verfahren nach einem der Ansprüche 1 bis 7,
**dadurch gekennzeichnet, daß** der erste Ultraschallprüfkopf (31) derart angeordnet ist, daß seine Abstrahlrichtung (31A) in Projektion auf eine tangential zur Lauffläche (19) orientierte Tangential-Ebene (51) bezüglich einer Umfangstangente (61) um einen ersten Tangential-Einschallwinkel (α₁) geneigt ist.

9. Verfahren nach einem der Ansprüche 3 bis 8,
**dadurch gekennzeichnet, daß** der zweite Ultraschallprüfkopf (33) derart angeordnet ist, daß seine Abstrahlrichtung (33A) in Projektion auf eine tangential zur Lauffläche (19) orientierte Tangential-Ebene (51) bezüglich einer Umfangstangente (61) um einen zweiten Tangential-Einschallwinkel (α₂) geneigt ist.

10. Verfahren nach Anspruch 8 und 9,
**dadurch gekennzeichnet, daß** der erste Tangential-Einschallwinkel (α₁) und der zweite Tangential-Einschallwinkel (α₂) bezüglich der Umfangstangente (61) unterschiedliche Vorzeichen haben.

11. Verfahren nach einem der Ansprüche 1 bis 10 oder 3 bis 10,
**dadurch gekennzeichnet, daß** der erste Ultraschallprüfkopf (31) bzw. der zweite Ultraschallprüfkopf (33) einen als Gruppenstrahler ausgebildeten Ultraschallwandler aufweist.

12. Verfahren nach einem der Ansprüche 1 bis 11,
**dadurch gekennzeichnet, daß** die Abstrahlrichtung (31A) des ersten Ultraschallprüfkopfs (31) mit einer Komponente (52) in einer tangential zur Lauffläche (19) orientierten Tangential-Ebene (51) geschwenkt wird.

13. Verfahren nach Anspruch 12,
**dadurch gekennzeichnet, daß** die Mittenrichtung (31B) des Schwenkintervalls (31C) des ersten Ultraschallprüfkopfs (31) bezüglich einer Umfangstangente (61) geneigt ist.

14. Verfahren nach einem der Ansprüche 3 bis 13,
**dadurch gekennzeichnet, daß** die Abstrahlrichtung (33A) des zweiten Ultraschallprüfkopfs (33) mit einer Komponente (52) in einer tangential zur Lauffläche (19) orientierten Tangential-Ebene (51) geschwenkt wird.

15. Verfahren nach Anspruch 14,
**dadurch gekennzeichnet, daß** die Mittenrichtung (33B) des Schwenkintervalls (33C) des zweiten Ultraschallprüfkopfs (33) bezüglich einer Umfangstangente (61) geneigt ist.

16. Verfahren nach Anspruch 13 und 15,
**dadurch gekennzeichnet, daß** die Mittenrichtungen (31B, 33B) des Schwenkintervalls (31C, 33C) des ersten Ultraschallprüfkopfs (31) und des zweiten Ultraschallprüfkopfs (33) nach unterschiedlichen Seiten der Umfangstangente (61) geneigt sind.

17. Verfahren nach einem der Ansprüche 1 bis 10,
**dadurch gekennzeichnet, daß** ein Vertikal-Einschallwinkel (αᵥ) wenigstens einer der Ultraschallprüfköpfe (31, 33) einen Wert zwischen 50° und 80° zum Radius (59) aufweist.

18. Verfahren nach einem der Ansprüche 1 bis 17 oder 3 bis 17,
**dadurch gekennzeichnet, daß** der erste Ultraschallprüfkopf (31) bzw. der zweite Ultraschallprüfkopf (33) in Impuls-Echo-Technik betrieben wird.

19. Verfahren nach einem der Ansprüche 1 bis 18,
**dadurch gekennzeichnet, daß** ein dritter Ultraschallprüfkopf (35), der mit seiner Einkoppelfläche an der Lauffläche (19) akustisch angekoppelt ist und von dem eine Ultraschallwelle mit einer Komponente in Richtung auf den oder von dem ersten Ultraschallprüfkopf (31) send- bzw. empfangbar ist, in gleicher Weise wie der erste Ultraschallprüfkopf (31) bewegt wird.

20. Verfahren nach einem der Ansprüche 3 bis 19,
**dadurch gekennzeichnet, daß** ein vierter Ultraschallprüfkopf (37), der mit seiner Einkoppelfläche an der Lauffläche (19) akustisch angekoppelt ist und von dem eine Ultraschallwelle mit einer Komponente in Richtung auf den oder von dem zweiten Ultraschallprüfkopf (33) send- bzw. empfangbar ist, in gleicher Weise wie der zweite Ultraschallprüfkopf (33) bewegt wird.

21. Vorrichtung zur Detektion eines Defekts (29) im Eisenbahnrad (3) eines Eisenbahnzugs (1), bevorzugt zur Durchführung des Verfahrens nach einem der Ansprüche 1 bis 20, **gekennzeichnet durch** einen in der Fahrrichtung (5) und mit der Fahrgeschwindigkeit (V) des Eisenbahnzugs (1) auf einer Stützstruktur in der Umgebung des Eisenbahnzugs (3) verfahrbaren Prüfwagen (11), an dem ein erster Ultraschallprüfkopf (31) beweglich gelagert ist, der akustisch an das Eisenbahnrad (3) ankoppelbar ist.

22. Vorrichtung nach Anspruch 21,
**dadurch gekennzeichnet, daß** der Prüfwagen (11) seitlich neben dem Eisenbahnzug (1) angeordnet ist.

23. Vorrichtung nach Anspruch 21 oder 22,
**dadurch gekennzeichnet, daß** an dem Prüfwagen (11) ein zweiter Ultraschallprüfkopf (33) befestigt ist.

24. Vorrichtung nach einem der Ansprüche 21 bis 23,
**dadurch gekennzeichnet, daß** der erste Ultraschallprüfkopf (31) an die Lauffläche (19) des Eisenbahnrads (3) akustisch ankoppelbar ist.

25. Vorrichtung nach Anspruch 23 oder 24,
**dadurch gekennzeichnet, daß** der zweite Ultraschallprüfkopf (33) an die Lauffläche (19) des Eisenbahnrads (3) akustisch ankoppelbar ist.

26. Vorrichtung nach Anspruch 23 und 25,
**dadurch gekennzeichnet, daß** der zweite Ultraschallprüfkopf (33) auf dem Prüfwagen (11) derart angeordnet ist, daß er bezüglich des ersten Ultraschallprüfkopfs (31) entlang einer zur Rotationsachse (39) des Eisenbahnrads (3) parallelen Richtung (41) versetzt ankoppelbar ist.

27. Vorrichtung nach einem der Ansprüche 21 bis 26 oder 23 bis 26,
**dadurch gekennzeichnet, daß** der erste Ultraschallprüfkopf (31) bzw. der zweite Ultraschallprüfkopf (33) federnd auf die Lauffläche (19) des Eisenbahnrads (3) aufsetzbar ist.

28. Vorrichtung nach einem der Ansprüche 21 bis 27,
**dadurch gekennzeichnet, daß** der Prüfwagen (11) von dem fahrenden Eisenbahnzug (1) antreibbar ist.!

29. Vorrichtung nach einem der Ansprüche 21 bis 28,
**dadurch gekennzeichnet, daß** der Prüfwagen (11) weitere Ultraschallprüfköpfe zur gleichzeitigen Rißdetektion in zwei oder vier Eisenbahnrädern (3, 3A) eines Drehgestells des Eisenbahnzugs (1) aufweist.

30. Vorrichtung nach einem der Ansprüche 23 bis 29,
**dadurch gekennzeichnet, daß** der erste Ultraschallprüfkopf (31) und der zweite Ultraschallprüfkopf (33) und optional ein dritter und ein vierter Ultraschallprüfkopf (35 bzw. 37) auf einem gemeinsamen Prüfkopfträger (17) angeordnet sind, der am Prüfwagen (11) befestigt ist.

## Claims

1. Method for the detection of a defect (29) in a railroad wheel (3) of a train (1), **characterized in that**
a) a first ultrasonic probe (31) supported movably on a test carriage (11) is brought up to the railroad wheel (3),
b) the first ultrasonic probe (31) is coupled acoustically to the railroad wheel (3),
c) the train (1) is moved at a predetermined travelling speed (V), and
d) at the same time the test carriage (11) is moved on a supporting structure in the vicinity of the train (1) in the direction of travel (5) at the travelling speed (V).

2. Method according to claim 1, **characterized in that** the first ultrasonic probe (31) is coupled acoustically with its injection surface on the running surface (19) of the railroad wheel (3).

3. Method according to claim 1 or 2, **characterized in that** a second ultrasonic probe (33), which is coupled acoustically with its injection surface on the running surface (19) and is offset with reference to the first ultrasonic probe (31) along a direction (41) parallel to the axis of rotation (39) of the railroad wheel (3), is moved in the same way as the first ultrasonic probe (31).

4. Method according to claim 3, **characterized in that** the offset (D) of the two ultrasonic probes (31, 33) has a value between 30 mm and 60 mm relative to the points of incidence.

5. Method according to one of claims 1 to 4, **characterized in that** the first ultrasonic probe (31) is positioned such that its injection surface extends over the outer wear zone (73) on the running surface (19).

6. Method according to one of claims 3 to 5, **characterized in that** the second ultrasonic probe (33) is positioned such that its injection surface extends over the inner wear zone (75) on the running surface (19).

7. Method according to one of claims 1 to 6 or 3 to 6, **characterized in that** the first ultrasonic probe (31) and the second ultrasonic probe (33) respectively are operated in transmit-receive technique.

8. Method according to one of claims 1 to 7, **characterized in that** the first ultrasonic probe (31) is arranged such that its beam direction (31A) is inclined in projection onto a tangential plane (51) oriented tangentially to the running surface (19) by a first tangential angle of incidence (α₁) with reference to a circumferential tangent (61).

9. Method according to one of claims 3 to 8, **characterized in that** the second ultrasonic probe (33) is arranged such that its beam direction (33A) is inclined in projection onto a tangential plane (51) oriented tangentially to the running surface (19) by a second tangential angle of incidence (α₂) with reference to a circumferential tangent (61).

10. Method according to claim 8 and 9, **characterized in that** the first tangential angle of incidence (α₁) and the second tangential angle of incidence (α₂) have different mathematical signs with reference to the circumferential tangent (61).

11. Method according to one of claims 1 to 10 or 3 to 10, **characterized in that** the first ultrasonic probe (31) and the second ultrasonic probe (33) respectively have an ultrasonic transducer formed as an array-type probe.

12. Method according to one of claims 1 to 11, **characterized in that** the beam direction (31A) of the first ultrasonic probe (31) is swivelled with a component (52) in a tangential plane (51) oriented tangentially to the running surface (19).

13. Method according to claim 12, **characterized in that** the central direction (31B) of the swivel interval (31C) of the first ultrasonic probe (31) is inclined with reference to a circumferential tangent (61).

14. Method according to one of claims 3 to 13, **characterized in that** the beam direction (33A) of the second ultrasonic probe (33) is swivelled with a component (52) in a tangential plane (51) oriented tangentially to the running surface (19).

15. Method according to claim 14, **characterized in that** the central direction (33B) of the swivel interval (33C) of the second ultrasonic probe (33) is inclined with reference to a circumferential tangent (61).

16. Method according to claim 13 and 15, **characterized in that** the central directions (31B, 33B) of the swivel interval (31C, 33C) of the first ultrasonic probe (31) and the second ultrasonic probe (33) are inclined to different sides of the circumferential tangent (61).

17. Method according to one of claims 1 to 10, **characterized in that** a vertical angle of incidence (αᵥ) of at least one of the ultrasonic probes (31, 33) has a value between 50° and 80° to the radius (59).

18. Method according to one of claims 1 to 17 or 3 to 17, **characterized in that** the first ultrasonic probe (31) and the second ultrasonic probe (33) are operated in pulse-echo technique.

19. Method according to one of claims 1 to 18, **characterized in that** a third ultrasonic probe (35), which is coupled acoustically with its injection surface on the running surface (19) and by which an ultrasonic wave with a component in or from the direction of the first ultrasonic probe (31) is transmissible or receivable, is moved in the same way as the first ultrasonic probe (31).

20. Method according to one of claims 3 to 19, **characterized in that** a fourth ultrasonic probe (37), which is coupled acoustically with its injection surface on the running surface (19) and by which an ultrasonic wave with a component in or from the direction of the second ultrasonic probe (33) is transmissible or receivable, is moved in the same way as the second ultrasonic probe (33).

21. Device for detecting a defect (29) in the railroad wheel (3) of a train (1), preferably for executing the method according to one of claims 1 to 20, **characterized by** a test carriage (11) movable in the direction of travel (5) and at the travelling speed (V) of the train (1) on a supporting structure in the vicinity of the railroad wheel (3), on which carriage a first ultrasonic probe (31) is supported movably, which can be coupled acoustically to the railroad wheel (3).

22. Device according to claim 21, **characterized in that** the test carriage (11) is arranged laterally next to the train (1).

23. Device according to claim 21 or 22, **characterized in that** a second ultrasonic probe (33) is attached to the test carriage (11).

24. Device according to one of claims 21 to 23, **characterized in that** the first ultrasonic probe (31) can be coupled acoustically to the running surface (19) of the railroad wheel (3).

25. Device according to claim 23 or 24, **characterized in that** the second ultrasonic probe (33) can be coupled acoustically to the running surface (19) of the railroad wheel (3).

26. Device according to claim 23 and 25, **characterized in that** the second ultrasonic probe (33) is arranged on the test carriage (11) such that it can be coupled offset with reference to the first ultrasonic probe (31) along a direction (41) parallel to the axis of rotation (39) of the railroad wheel (3).

27. Device according to one of claims 21 to 26 or 23 to 26, **characterized in that** the first ultrasonic probe (31) and the second ultrasonic probe (33) can be placed elastically on the running surface (19) of the railroad wheel (3).

28. Device according to one of claims 21 to 27, **characterized in that** the test carriage (11) is drivable by the travelling train (1).

29. Device according to one of claims 21 to 28, **characterized in that** the test carriage (11) has further ultrasonic probes for simultaneous crack detection in two or four railroad wheels (3, 3A) of a bogie of a train (1).

30. Device according to one of claims 23 to 29, **characterized in that** the first ultrasonic probe (31) and the second ultrasonic probe (33) and optionally a third and a fourth ultrasonic probe (35 and 37) are arranged on a common probe carrier (17), which is attached to the test carriage (11).

## Revendications

1. Procédé pour la détection d'un défaut (29) dans la roue (3) d'un train de chemin de fer (1),
**caractérisé par le fait que**
a) on approche une première tête de contrôle par ultrasons (31), montée mobile sur un chariot de contrôle (11), de la roue de train (3),
b) on couple la première tête de contrôle par ultrasons (31) de façon acoustique à la roue de train (3),
c) on déplace le train (1) à une vitesse d'avance (V) prédéterminée, et
d) on déplace simultanément le chariot de contrôle (11) sur une structure de support à proximité du train (1) dans le sens d'avance (5) avec la vitesse d'avance (V).

2. Procédé selon la revendication 1,
**caractérisé par le fait que** la première tête de contrôle par ultrasons (31) est couplée de façon acoustique avec sa surface d'introduction à la surface de roulement (19) de la roue (3).

3. Procédé selon la revendication 1 ou 2,
**caractérisé par le fait qu'**une deuxième tête de contrôle par ultrasons (33), qui est couplée de façon acoustique avec sa surface d'introduction à la surface de roulement (19) et qui est décalée par rapport à la première tête de contrôle par ultrasons (31) le long d'une direction (41) parallèle à l'axe de rotation (39) de la roue (3), est déplacée de la même manière que la première tête de contrôle par ultrasons (31).

4. Procédé selon la revendication 3,
**caractérisé par le fait que** le décalage (D) des deux têtes de contrôle par ultrasons (31, 33), rapporté aux points d'irradiation acoustique, a une valeur comprise entre 30 mm et 60 mm.

5. Procédé selon l'une des revendications 1 à 4,
**caractérisé par le fait que** la première tête de contrôle par ultrasons (31) est positionnée de telle sorte que sa surface d'introduction balaie la zone d'usure extérieure (73) sur la surface de roulement (19).

6. Procédé selon l'une des revendications 3 à 5,
**caractérisé par le fait que** la deuxième tête de contrôle par ultrasons (33) est positionnée de telle sorte que sa surface d'introduction balaie la zone d'usure intérieure (75) sur la surface de roulement (19).

7. Procédé selon l'une des revendications 1 à 6 ou 3 à 6,
**caractérisé par le fait que** la première tête de contrôle par ultrasons (31) ou la deuxième tête de contrôle par ultrasons (33) fonctionne selon la technique émission-réception.

8. Procédé selon l'une des revendications 1 à 7,
**caractérisé par le fait que** la première tête de contrôle par ultrasons (31) est disposée de telle sorte que sa direction de rayonnement (31A) en projection sur un plan tangentiel (51) orienté tangentiellement à la surface de roulement (19) est inclinée d'un premier angle d'irradiation tangentielle (α₁) par rapport à une tangente circonférentielle (61).

9. Procédé selon l'une des revendications 3 à 8,
**caractérisé par le fait que** la deuxième tête de contrôle par ultrasons (33) est disposée de telle sorte que sa direction de rayonnement (33A) en projection sur un plan tangentiel (51) orienté tangentiellement à la surface de roulement (19) est inclinée d'un deuxième angle d'irradiation tangentielle (α₂) par rapport à une tangente circonférentielle (61).

10. Procédé selon la revendication 8 ou 9,
**caractérisé par le fait que** le premier angle d'irradiation tangentielle (α₁) et le deuxième angle d'irradiation tangentielle (α₂) ont des signes différents par rapport à la tangente circonférentielle (61).

11. Procédé selon l'une des revendications 1 à 10 ou 3 à 10,
**caractérisé par le fait que** la première tête de contrôle par ultrasons (31) ou la deuxième tête de contrôle par ultrasons (33) comporte un convertisseur d'ultrasons conçu comme un réseau d'émetteurs.

12. Procédé selon l'une des revendications 1 à 11,
**caractérisé par le fait que** la direction de rayonnement (31A) de la première tête de contrôle par ultrasons (31) pivote avec une composante (52) dans un plan tangentiel (51) orienté tangentiellement à la surface de roulement (19).

13. Procédé selon la revendication 12,
**caractérisé par le fait que** la direction médiane (31B) de l'intervalle de pivotement (31C) de la première tête de contrôle par ultrasons (31) est inclinée par rapport à une tangente circonférentielle (61).

14. Procédé selon l'une des revendications 3 à 13,
**caractérisé par le fait que** la direction de rayonnement (33A) de la deuxième tête de contrôle par ultrasons (33) pivote avec une composante (52) dans un plan tangentiel (51) orienté tangentiellement à la surface de roulement (19).

15. Procédé selon la revendication 14,
**caractérisé par le fait que** la direction médiane (33B) de l'intervalle de pivotement (33C) de la deuxième tête de contrôle par ultrasons (33) est inclinée par rapport à une tangente circonférentielle (61).

16. Procédé selon les revendications 13 et 15,
**caractérisé par le fait que** les directions médianes (31B, 33B) des intervalles de pivotement (31C, 33C) de la première tête de contrôle par ultrasons (31) et de la deuxième tête de contrôle par ultrasons (33) sont inclinées vers des côtés différents de la tangente circonférentielle (61).

17. Procédé selon l'une des revendications 1 à 10,
**caractérisé par le fait qu'**un angle d'irradiation verticale (αᵥ) d'au moins l'une des têtes de contrôle par ultrasons (31, 33) a une valeur comprise entre 50° et 80° par rapport au rayon (59).

18. Procédé selon l'une des revendications 1 à 17 ou 3 à 17,
**caractérisé par le fait que** la première tête de contrôle par ultrasons (31) ou la deuxième tête de contrôle par ultrasons (33) fonctionne selon la technique impulsion-écho.

19. Procédé selon l'une des revendications 1 à 18,
**caractérisé par le fait qu'**une troisième tête de contrôle par ultrasons (35), qui est couplée de façon acoustique avec sa surface d'introduction à la surface de roulement (19) et qui peut émettre ou recevoir une onde ultrasonore ayant une composante dans la direction allant vers la première tête de contrôle par ultrasons (31) ou venant de celle-ci, est déplacée de la même manière que la première tête de contrôle par ultrasons (31).

20. Procédé selon l'une des revendications 3 à 19,
**caractérisé par le fait qu'**une quatrième tête de contrôle par ultrasons (37), qui est couplée de façon acoustique avec sa surface d'introduction à la surface de roulement (19) et qui peut émettre ou recevoir une onde ultrasonore ayant une composante dans la direction allant vers la deuxième tête de contrôle par ultrasons (33) ou venant de celle-ci qui peut être émise ou être reçue, est déplacée de la même manière que la deuxième tête de contrôle par ultrasons (33).

21. Dispositif pour la détection d'un défaut (29) dans la roue (3) d'un train de chemin de fer (1), de préférence pour la mise en oeuvre du procédé selon l'une des revendications 1 à 20,
**caractérisé par** un chariot de contrôle (11) qui est déplaçable dans le sens d'avance (5) et avec la vitesse d'avance (V) du train (1) sur une structure de support à proximité du train (1) et sur lequel peut être montée, mobile, une première tête de contrôle par ultrasons (31) qui peut être couplée de façon acoustique à la roue (3).

22. Dispositif selon la revendication 21,
**caractérisé par le fait que** le chariot de contrôle (11) est disposé latéralement à côté du train (1).

23. Dispositif selon la revendication 21 ou 22,
**caractérisé par le fait qu'**une deuxième tête de contrôle par ultrasons (33) est fixée au chariot de contrôle (11).

24. Dispositif selon l'une des revendications 21 à 23,
**caractérisé par le fait que** la première tête de contrôle par ultrasons (31) peut être couplée de façon acoustique à la surface de roulement (19) de la roue (3).

25. Dispositif selon la revendication 23 ou 24,
**caractérisé par le fait que** la deuxième tête de contrôle par ultrasons (33) peut être couplée de façon acoustique à la surface de roulement (19) de la roue (3).

26. Dispositif selon la revendication 23 ou 25,
**caractérisé par le fait que** la deuxième tête de contrôle par ultrasons (33) est disposée sur le chariot de contrôle (11) de telle sorte qu'elle peut être couplée avec un décalage, par rapport à la première tête de contrôle par ultrasons (31), le long d'une direction (41) parallèle à l'axe de rotation (39) de la roue (3).

27. Dispositif selon l'une des revendications 21 à 26 ou 23 à 26,
**caractérisé par le fait que** la première tête de contrôle par ultrasons (31) ou la deuxième tête de contrôle par ultrasons (33) peut être posée de façon élastique sur la surface de roulement (19) de la roue (3).

28. Dispositif selon l'une des revendications 21 à 27,
**caractérisé par le fait que** le chariot de contrôle (11) peut être entraîné par le train (1) qui roule.

29. Dispositif selon l'une des revendications 21 à 28,
**caractérisé par le fait que** le chariot de contrôle (11) comporte d'autres têtes de contrôle par ultrasons pour la détection simultanée de fissures dans deux ou quatre roues (3, 3A) d'un bogie du train (1).

30. Dispositif selon l'une des revendications 23 à 29,
**caractérisé par le fait que** la première tête de contrôle par ultrasons (31) et la deuxième tête de contrôle par ultrasons (33) et, en option, une troisième tête de contrôle par ultrasons (35) et une quatrième tête de contrôle par ultrasons (37) sont montées sur un support de têtes de contrôle (17) commun qui est fixé au chariot de contrôle (11).
